# EUROPEAN PATENT APPLICATION

(11) **EP 4 485 946 A2**
(43) Date of publication of application: **01.01.2025**
(21) Application number: 23775402.3
(22) Date of filing: 21.03.2023
(51) Int. Cl.: H04N 21/431, H04N 21/472, H04N 21/4402, H04N 5/262

(54) **SPECIAL EFFECT VIDEO DETERMINATION METHOD AND APPARATUS, ELECTRONIC DEVICE AND STORAGE MEDIUM**

(30) Priority: 25.03.2022 CN 202210307632
(71) Applicant: Lemon Inc., Grand Cayman, KY1-1205 (KY)
(72) Inventor: LIU, Huilin, Beijing 100086 (CN); XIE, Min, Beijing 100086 (CN); PAN, Keting, Beijing 100086 (CN); CHEN, Yiling, Los Angeles, CA 90066 (US); HUO, Aixin, Beijing 100086 (CN); LIAO, Jie, Los Angeles, CA 90066 (US); ZHANG, Yongjie, Beijing 100086 (CN); CHEN, Yi, Beijing 100086 (CN); SONG, Xiaodong, Beijing 100086 (CN); WANG, Quan, Los Angeles, CA 90066 (US); WANG, Jiaxin, Beijing 100086 (CN)
(74) Representative: Dentons UK and Middle East LLP
(86) International application number: PCT/SG2023/050183
(87) International publication number: WO 2023/182937

(57) **Abstract**

Embodiments of the disclosure provide a special effect video determination method and apparatus, an electronic device and a storage medium. The method comprises: when it is detected that a target special effect template is triggered, calling a target configuration file corresponding to the target special effect template; by analyzing and processing the target configuration file, determining a target editing item and editing parameters of the target editing item, and displaying the target editing item; when a special effect material to be edited that corresponds to the corresponding target editing item is received, displaying an editing parameter corresponding to the target editing item, so as to determine, on the basis of an adjustment operation on the editing parameter, a target special effect material corresponding to the special effect material to be edited; and on the basis of the target special effect material and a corresponding video stream to be processed, obtaining a target special effect video using the video stream to be processed as background information.

## Description

The present application claims the priority of Chinese Patent Application No. 202210307632.7 filed in China National Intellectual Property Administration on March 25, 2022, and the entire contents of the Chinese Patent application are incorporated into the present application by reference.

### TECHNICAL FIELD

The embodiments of the present disclosure relate to the technical field of image processing, such as, relates to a method and apparatus for determining an effect video, an electronic device, and a storage medium.

### BACKGROUND

With the continuous development of image processing technology, a user can create an effect by using various effect creation tools or engines on platforms such as a personal computer (PC), and then add the effect to a video to obtain a corresponding effect video.

However, in the solutions provided by related technologies, the effect creation tools and engines have high requirements on the platform and the hardware used by the user. At the same time, the user also needs to have some technical skills in creating effect. Under the above restrictions, the threshold for making the effect video is relatively high, and the user cannot create the effect video that meet expectations in a simple and quick means.

### SUMMARY

The present disclosure provides a method and apparatus for determining an effect video, an electronic device, and a storage medium, so that a user can create an effect video meeting the personalized requirements in a simple and quick way, and at that same time, the threshold for making the effect video is lowered.

In a first aspect, an embodiment of the present disclosure provides a method for determining an effect video, which is applied to a client and includes:

in response to detecting that a target effect template is triggered, retrieving a target configuration file corresponding to the target effect template;
determining a target edit item corresponding to the target effect template and an edit parameter of the target edit item by parsing and processing the target configuration file, and displaying the target edit item;
in response to receiving an effect material to be edited corresponding to a corresponding target edit item, displaying the edit parameter corresponding to the target edit item, so as to determine a target effect material corresponding to the effect material to be edited based on an adjustment operation on the edit parameter; and
based on the target effect material and a corresponding video stream to be processed, obtaining a target effect video with the video stream to be processed as background information.

In the second aspect, an embodiment of the present disclosure also provides an apparatus for determining an effect video, which is configured in a client and comprises:
a target configuration file retrieval module, configured to retrieve a target configuration file corresponding to a target effect template in response to detecting that the target effect template is triggered;
a target edit item display module, configured to determine a target edit item corresponding to the target effect template and an edit parameter of the target edit item by parsing and processing the target configuration file, and display the target edit item;
a target effect material determination module, configured to, in response to receiving an effect material to be edited corresponding to a corresponding target edit item, display the edit parameter corresponding to the target edit item, so as to determine a target effect material corresponding to the effect material to be edited based on an adjustment operation on the edit parameter; and
a target effect video generation module, configured to, based on the target effect material and a corresponding video stream to be processed, obtain a target effect video with the video stream to be processed as background information.

In a third aspect, an embodiment of the present disclosure also provides an electronic device, including:
at least one processor;
a storage apparatus, configured to store at least one program,
when the at least one program is executed by the at least one processor, the at least one processor is enabled to implement the method for determining an effect video according to any embodiment of the present disclosure.

In a fourth aspect, an embodiment of the present disclosure also provides a storage medium containing computer-executable instructions, and the computer-executable instructions, when executed by a computer processor, are used to perform the method for determining an effect video according to any of the embodiments of the present disclosure.

### BRIEF DESCRIPTION OF DRAWINGS

Fig. 1 is a schematic flowchart of a method for determining an effect video provided by embodiment 1 of the present disclosure;
Fig. 2 is a schematic diagram of displaying a plurality of target edit items in a first display region provided by embodiment 1 of the present disclosure;
Fig. 3 is a schematic diagram of displaying a plurality of edit parameters in a second display region provided by embodiment 1 of the present disclosure;
Fig. 4 is a schematic diagram of adjusting a plurality of edit parameters in a second display region provided by embodiment 1 of the present disclosure;
Fig. 5 is a schematic diagram of generating an effect video through cooperation between a client and an effect terminal provided by embodiment 1 of the present disclosure;
Fig. 6 is a schematic structural diagram of an apparatus for determining an effect video provided by embodiment 2 of the present disclosure; and
Fig. 7 is a schematic structural diagram of an electronic device provided by embodiment 3 of the present disclosure.

### DETAILED DESCRIPTION

It should be understood that various steps recorded in the implementation modes of the methods of the present disclosure can be performed according to different orders and/or performed in parallel. In addition, the implementation modes of the methods can include additional steps and/or omit performing the steps shown. The scope of the present disclosure is not limited in this aspect.

The term "comprise/include" and variations thereof used in this article are open-ended inclusion, namely "comprising/including but not limited to". The term "based on" refers to "at least partially based on". The term "one embodiment" means "at least one embodiment"; the term "another embodiment" means "at least one other embodiment"; and the term "some embodiments" means "at least some embodiments". Relevant definitions of other terms may be given in the description hereinafter.

It should be noted that the concepts, such as "first" and "second", mentioned in the present disclosure are only used to distinguish different apparatuses, modules, or units, and are not intended to limit orders or interdependence relationships of functions performed by these apparatuses, modules, or units. It should be noted that the modifications of "one" and "more/plurality" mentioned in the present disclosure are illustrative rather than restrictive, and those skilled in the art should understand that unless otherwise explicitly stated in the context, it should be understood as "at least one".

Before introducing the present technical scheme, an application scenario of the embodiment of the present disclosure may be exemplified. For example, when a user shoots a video through an application software or makes a video call with other users, there may be a personalized need to add effects to a current video screen in a simple way and with a high degree of freedom. For example, while shooting a video, the user may want to add a pre-constructed 3D (three-dimensional) cartoon model to the current video screen after adjusting it according to his own wishes. In this case, according to the technical scheme of the embodiment, the user can be provided with a way to add effects and customize the effects in the application, so that the user can make the effect video that meets their expectations in a simple and quick way.

### Embodiment 1

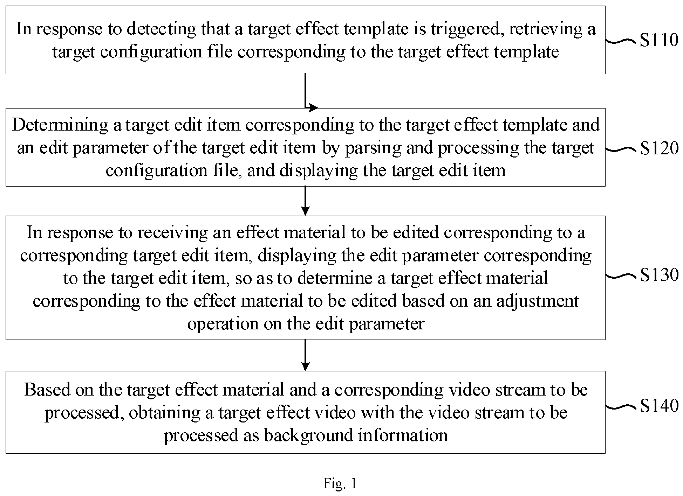

Fig. 1 is a schematic flowchart of a method for determining an effect video provided by embodiment 1 of the present disclosure. The embodiment of the present disclosure is suitable for a situation where the user creates the effect video in a simple way based on the client. The method can be implemented by an apparatus for determining an effect video, and the apparatus can be implemented in the form of at least one of software and hardware, or alternatively, by an electronic device, and the electronic device can be a mobile terminal, a PC terminal, or a server.

As shown in Fig. 1, the method includes:
S110: in response to detecting that a target effect template is triggered, retrieving a target configuration file corresponding to the target effect template.

Among them, the apparatus for executing the method for determining the effect video provided by the embodiment of the present disclosure can be integrated in the application software supporting an effect video processing function, and the application software can be installed in an electronic device, optionally, the electronic device can be a mobile terminal or a PC terminal, etc. The application software can be a kind of software for image/video processing, and thus will not be described in detail here, as long as it can realize image/video processing. The application software can also be a specially developed application program, which is integrated in the software that adds the effects and displays the effects, or is integrated in the corresponding page, and the user can achieve to process the effect video through the integrated page in the PC terminal.

In the embodiment, an effect template can be at least one effect integrated in the application. It can be understood that each effect template is associated with a corresponding two-dimensional (2D) map or three-dimensional (3D) model. For example, for a cup effect, the effect template can be associated with a 3D cup model. At the same time, the effect template can also be associated with a plurality of pre-developed controls in the application after being marked with a logo used to represent the name of the effect. On this basis, when it is detected that the user triggers a specific control, the effect template corresponding to the control is the target effect template.

In the embodiment, before executing the scheme of the embodiment, at least one effect template to be used needs to be created; at least one edit item and an edit parameter of each edit item are determined according to an information type of displayable information in the effect template to be used; a configuration file of the effect template to be used is determined according to the edit items of the effect template to be used and the corresponding edit parameters; the effect templates to be used are displayed in a display interface, and the corresponding relationship between the effect templates to be used and the corresponding configuration files is established, so as to determine the target configuration file based on the corresponding relationship when it is detected that the target effect template is triggered.

Among them, the effect templates to be used are a plurality effect templates that are integrated into the application and waiting to be selected by the user. It can be understood that the models, information, thumbnails, and the like which are associated with the effect templates to be used can not only be created in advance by the staff and be integrated into the application, but also can be created independently by the user based on the client. For example, the user can set corresponding logos for the models based on the models created by himself on the application or other platforms. For example, after the model and the corresponding logo are imported into the application and associated with a specific control, an effect template to be used is created. Those skilled in the art should understand that the method for creating the effect template to be used is not limited to the above two methods, the creation method can be selected according to the actual situation, and the embodiments of the present disclosure are not specifically limited here.

In this embodiment, after the user selects the effect template to be used as the target effect template in the subsequent process, the application needs to render the picture corresponding to the effect on the display interface. Therefore, after creating the effect template to be used, the application also needs to determine the information type of the displayable information in the effect template to be used. Among them, the information types include text information type, voice information type, image information type, video information type, and model information type, etc. It can be understood that the above-mentioned process of determining the information type of the displayable information of the effect template to be used is the process of determining which type of picture needs to be rendered on the display interface in the subsequent process. Taking the cup effect template in the above description as an example, the application can determine that the displayable information of the effect template is a 3D cup model, and the information type corresponding to the model is the model information type, in the subsequent process, if the user selects the template as the target effect template, the application needs to render the picture corresponding to the 3D cup model on the display interface.

In this embodiment, after determining the information type of the displayable information of the effect template to be used, the application can determine at least one edit item and the edit parameter of the edit item according to the information. It can be understood that when the user selects the effect template to be used in the subsequent process, thus taking the effect template to be used as the target effect template, the edit item corresponding to the effect template to be used is the target edit item, the edit parameter corresponding to the edit item is the target edit parameter, and the embodiment of the present disclosure will not describe in detail here.

It can be understood that in the case that there are a plurality of information types of the displayable information of the target effect template, there are also differences in the target edit items corresponding to different information types. The target edit item includes at least one of: a text item, an image item, a video item, an audio item, an augmented reality (AR) model item, a 3D model item, and a file item; accordingly, the edit parameter corresponding to the target edit item includes at least one of: an audio address parameter, a playing parameter, an image address parameter, a display parameter, a video address parameter, an AR model address parameter, a 3D model address parameter, a scaling parameter, a color parameter, and a mapping parameter.

It should be noted that for the target effect templates, each target effect template can be associated with at least one target edit item, and correspondingly, each target edit item can also be associated with at least one target parameter according to actual requirements. For example, a first target effect template is associated with a text item, an audio item, and a video item, and a second target effect template is associated with an image item and an audio item. At the same time, the audio item of the first target effect template is only set with an audio address parameter, while the audio item of the second target effect template is not only set with an audio address parameter, but also with a playing parameter and a mapping parameter.

It should also be noted that the above-mentioned information such as the target edit items and associated target parameters can be created by developers in advance and initial values of the target parameters can be set, and then the information can be stored in a library corresponding to the corresponding effect model. When the user selects one of the effect templates as the target effect template, the application can display the target edit items and the target parameters associated with the effect template in the display interface. Of course, in the actual application process, after the user determines the target effect template, the user can also add a new target edit item to the target effect template in real time according to his own needs, for example, adding an audio item to an effect only associated with a text item through touch operation, and for example, adjusting the edit parameter associated with the added audio item through touch operation.

For example, when the target edit item is a text item, it indicates that the user can edit the text information associated with the effect. For example, the user can input text in an edit box corresponding to the text item, so that the application can finally render the input text on the display interface; when the target edit item is an image item, it indicates that the user can edit an image associated with the effect, at the same time, the image item also corresponds to an image address parameter, for example, the Uniform Resource Locator (URL) of the image. It can be understood that the parameter can be manually entered by the user, and the parameter is at least set to make the application determine where to retrieve the image corresponding to the target effect template in the process of making the effect video. Similarly, when the target edit item is a video item, it indicates that the user can edit the video associated with the effect, at the same time, the video item also corresponds to the video address parameter, the playing parameter, and the like. It can be understood that these parameters can also be manually entered by the user, the video address parameter is at least set to enable the application to determine where to retrieve the video corresponding to the target effect template, and the playing parameter is set to enable the application to determine the playing mode of the video in the effect video, for example, playing the video at several times the speed in the final generated effect video, or whether playing the video in a loop in the effect video. When the target edit item is an audio item, it indicates that the user can edit the sound information associated with the effect, and the audio item also corresponds to the audio address parameter and the playing parameter. It can be understood that the audio address parameter is set to enable the application to determine where to retrieve the audio corresponding to the target effect template, and the playing parameter is set to enable the application to determine the playing mode of the audio in the effect video, which will not be described in detail here in the embodiment of the present disclosure. When the target edit item is an AR model item or a 3D model item, it indicates that the user can edit the AR model or 3D model associated with the effect, correspondingly, the AR model item corresponds to the AR model address parameter, and the 3D model item corresponds to the 3D model address parameter. It can be understood that the model address parameter is set to make the application determine where to retrieve the AR model or 3D model corresponding to the target effect template. When the target edit item is a file item, it indicates that the user can edit files in various formats and then associate the edited files with the target effect template.

In the embodiment, the AR model retrieved by the application can be a model built by the developer in advance, and the model is bound with the corresponding effect template and stored. Based on this, when the user selects the effect template as the target effect template, the application can call the AR model in the storage space, and then display the target edit items associated with the AR model and the edit parameters of target edit items on the display interface. For the 3D model, on one hand, the 3D model can also be a model built by the developer in advance; on the other hand, it is also possible that when the user makes the effect video based on the client, after determining the target effect template, part images can be manually selected from a plurality of stored images according to the user's touch operation, and then a 3D model corresponding to these images can be constructed in real time based on the selected part images and a model construction algorithm. On this basis, the application can also determine the corresponding target edit items and related edit parameters for the 3D model generated in real time, and present the information to the user, which is convenient for the user to adjust the display form of the 3D model in the finally-obtained effect video in the subsequent process.

It should be noted that the above displayable information can also correspond to the display parameter, the scaling parameter, the color parameter, and the mapping parameter, etc. It should be understood that the display parameter is set to make the application determine the display mode of the visual information related to the target edit item in the display interface, such as the parameters for determining the display position, whether to rotate, and the display size of the 3D model in the display interface; the scaling parameter is set to make the application determine whether the visual information related to the target edit item needs to be scaled when displayed, and the scaling multiple; the color parameter is set to make the application determine what color the visual information related to the target edit item needs to present when the visual information is displayed on the display interface; and the mapping parameter is set to allow the application to determine whether a preset 2D texture needs to be added when the visual information related to the target edit item is displayed on the display interface.

In the embodiment, when the at least one edit item and the edit parameter of the edit item are determined, the information can be integrated to obtain the configuration file of the effect template to be used. It can be understood that the parameters in the configuration file are the information that determines how the application will finally display the effect in the effect video. At the same time, for the effect template to be used, the configuration file can also be used as an initial setting file of the corresponding edit parameters.

Exemplarily, a plurality of effect templates to be used are displayed in the display interface, and a mapping table reflecting the association between the plurality of effect templates to be used and the corresponding configuration files is constructed. When it is detected that a user triggers an effect template to be used, that is, the effect template to be used is determined as the target effect template, the application can determine the configuration file corresponding to the target effect template by looking up the table. It should be understood by those skilled in the art that, in addition to constructing the mapping table, effect templates can also be associated with the configuration files by labeling the configuration files with specific identifiers, or binding the effect templates to be used with the corresponding configuration files and storing them in different areas, and the embodiments of the present disclosure do not limit this. At the same time, the configuration file corresponding to the effect template to be used can be integrated into the application or stored in a specific server (for example, the effect terminal associated with the client). When the target effect template is determined, the application can call the corresponding configuration file.

For example, when the address of the cup effect corresponding to the 3D cup model is determined, and at the same time, when it is determined that the display parameter of the cup effect is translucent display, the scaling parameter is 100%, and the color parameter is white, the application can construct a configuration file corresponding to the cup effect based on a plurality of parameters of the above-mentioned 3D model item, and at the same time, the configuration file is associated with the cup effect and then stored in the server corresponding to the effect terminal, and when it is detected that the user triggers the cup effect template, the configuration file can be retrieved from the server corresponding to the effect terminal.

In the embodiment, when it is detected that the target effect template is triggered, a camera device can also be started and a video shooting interface is jumped to, so as to generate the target effect material by using the video stream to be processed from the camera perspective as a background image.

For example, when the application detects the user's trigger operation and determines that the effect template is the target effect template, the application can issue an instruction to the camera device of the mobile terminal, so as to start the camera device to collect video pictures in real time. In the embodiment, the collected video stream to be processed without adding effects is the target effect material, and in the subsequent process of producing the effect video, the application can use the pictures in the video stream to be processed as background images in a plurality of effect video frames. Accordingly, the picture corresponding to the effect added by the application is a foreground image. It can be understood that the foreground image is superimposed and displayed on the background image, the foreground image can block all or part of the background image, thus making the constructed effect video frame more layered.

In the embodiment, the advantage of starting the camera device to collect images when it is detected that the target effect template is triggered is that: in the process of generating the effect video, users can not only use related videos as data basis, but also use real-time captured videos as data basis, which is convenient for users to produce effect videos anytime and anywhere in their daily lives or work, thus improving the flexibility of producing effect videos.

S120, determining a target edit item corresponding to the target effect template and an edit parameter of the target edit item by parsing and processing the target configuration file, and displaying the target edit item.

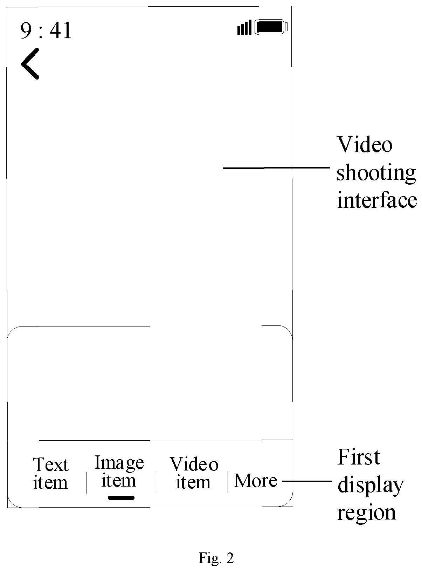

In the embodiment, after the application obtains the target configuration file corresponding to the target effect template, the application can parse the file, for example, calling and running a pre-written file processing program to parse the configuration file, so as to obtain the initial edit parameter set for the target edit item corresponding to the effect when the effect template is created. At the same time, in order to facilitate the user to process the effect, the application also needs to display the target edit item in a visual form, and the process will be described in detail in conjunction with Fig. 2 below.

Optionally, the target edit item is displayed in the form of a sliding window in a first display region of the video shooting interface, so as to determine an effect material to be uploaded according to the target edit item corresponding to a current sliding window. Referring to Fig. 2, after the application parses the target configuration file, the application can determine a text item, an image item, and a video item corresponding to the effect, and at the same time, a plurality of target edit items are displayed in a sliding window at the bottom of the display interface. It could be understood that other target edit items have been integrated into the "More" option, and the embodiments of the present disclosure will not describe the details here.

In the embodiment, the user can determine the effect materials to be uploaded corresponding to a plurality of target edit items through the trigger operation on the plurality of target edit items in the sliding window, the effect material is the effect content that need to be displayed finally and whose specific parameters needs to be edited, such as a 3D cup model or a cup map, etc. Continuing to refer to Fig. 2, after the user selects the image item of the target edit items, the application will display a black bold indicator line below the target edit item in the sliding window, which is convenient for the user to determine that the corresponding effect material is currently being determined for the image item. At the same time, the application will automatically call the picture library in the mobile terminal or the cloud server associated with the client, so as to take at least one image selected by the user as the effect material to be uploaded corresponding to the image item. After the user completes the selection, the application can upload the user's selection result to the effect terminal, and the effect terminal processes the image selected by the user and generate the corresponding effect video. It can be understood that in the final generated effect video, the image selected by the user can be presented in the video screen in the form of effect.

For example, when it is determined that the user selects the cup effect template as the target effect template, the application can obtain the configuration file corresponding to the cup effect, for example, the text item, the image item, the video item, and the like corresponding to the effect are displayed at the bottom of the display interface, in response to detecting the user's trigger operation on the image item, the application can call and display a plurality of cup images for the user to select, and when the user determines one image of the plurality of cup images, the application can upload the image to the effect terminal for processing, so as to render the image corresponding to the cup into the final generated effect video.

S130: in response to receiving an effect material to be edited corresponding to a corresponding target edit item, displaying the edit parameter corresponding to the target edit item, so as to determine a target effect material corresponding to the effect material to be edited based on an adjustment operation on the edit parameter.

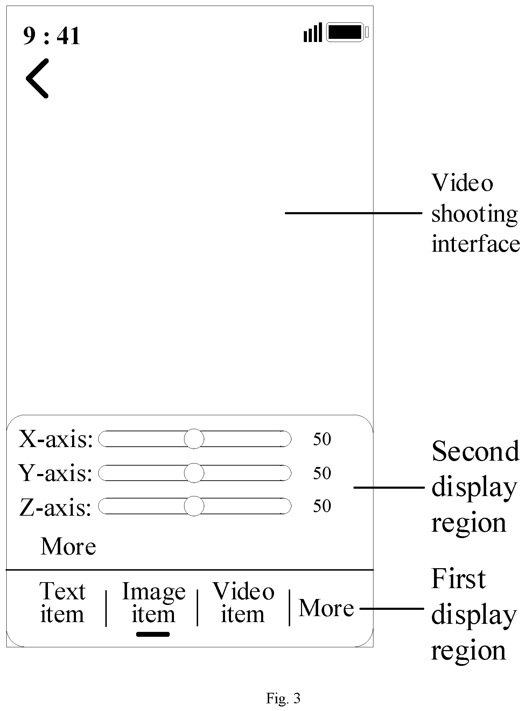

In the embodiment, after the effect terminal receives the effect material corresponding to the target edit item, the parameters of the material can be adjusted, so in this process, the effect material is also the effect material to be edited. For example, at least one effect material to be uploaded can be determined according to the target edit item corresponding to the current sliding window, and the effect material to be edited can be determined according to the trigger operation on the at least one effect material to be uploaded; when the effect material to be edited is received, the edit parameters associated with the target edit item are displayed in a second display region in the form of drag bars, the second display region is located in the video shooting interface and is different from the first display region. The process of displaying and adjusting the edit parameters will be described below with reference to Fig. 3.

As shown in Fig. 3, when the user clicks on an image item at the bottom of the display interface, selects an image in the picture library of the mobile terminal as the effect material to be uploaded, and clicks a determination button, the application can use the image as the effect material to be edited according to the user's trigger operation. For example, after receiving the image, the application or the effect terminal associated with the application can display a plurality of edit parameters corresponding to the image item in the second display region, and at the same time, display the plurality of edit parameters in the form of drag bars, respectively, as shown in Fig. 3, the application can display parameters on a X-axis, a Y-axis, and a Z-axis of a three-dimensional coordinate system corresponding to the effect material to be edited in the form of drag bars, and the user can adjust the above three parameters through the drag bars in the subsequent process, thus changing the display position, display posture, etc. of the effect material to be edited in the final obtained effect video. Those skilled in the art should understand that other edit parameters corresponding to the image item have been integrated into the "More" option, and when the user clicks this option, other edit parameters will also be displayed in the second display region in the form of drag bars; meanwhile, the method of displaying and adjusting edit parameters corresponding to other target edit items is similar to the method of displaying and adjusting the edit parameters of the image item in the above description, and will not be described again in the embodiment of the present disclosure.

For example, according to a trigger operation on a parameter adjustment control on the drag bar, an edit parameter to be applied corresponding to the effect material to be edited is determined; the edit parameter to be applied is sent to an effect processing module, so that the effect processing module renders and processes the effect material to be edited based on the edit parameter to be applied, and obtains the target effect material.

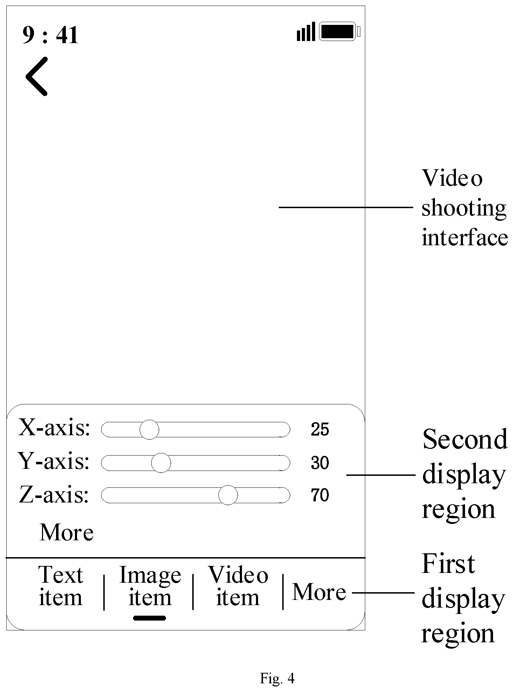

Referring to Fig. 4, after the application displays the plurality of edit parameters of the image item in the second display region, the user can drag a plurality of drag bars through touch operation, thereby adjusting a plurality of parameters. It can be understood that for the current target effect template, the adjusted parameters are the edit parameters to be applied. As shown in Fig. 4, by dragging three drag bars, the user adjusts the corresponding parameters of the effect material to be edited in the X-axis, Y-axis, and Z-axis from the initial (50, 50, 50) to (25, 30, 70), thus achieving the adjustment of the display posture of the effect material to be edited in the three-dimensional space. It can be understood that when the user has finished adjusting the plurality of edit parameters, the user can click the corresponding determination control, so that the application can determine the edit parameter to be applied, and the embodiments of the present disclosure do not describe the details here again.

In the embodiment, after the application determines the edit parameter to be applied, the data can be sent to the associated effect processing module, the effect processing module can be deployed at one end of the cloud server, and it can be understood that the effect processing module has strong computing ability and data processing ability. When the effect processing module receives the above data, the effect processing module can transfer the edit parameter to be applied to the corresponding rendering engine, so as to render the material. The rendering engine can be a program that controls a graphics processing unit (GPU) to render related images. It can be understood that in this embodiment, after the effect processing module transmits the edit parameter to the rendering engine, the computer can complete the task of determining pixel values of a plurality of pixels of the target effect material under the drive of the rendering engine.

S140, based on the target effect material and a corresponding video stream to be processed, obtaining a target effect video with the video stream to be processed as background information.

In the embodiment, after the effect processing module determines the pixel values of the plurality of pixels of the target effect material, in order to generate the effect video, it is also necessary to add the pictures corresponding to the target effect material to the video stream to be processed, so as to obtain the target effect video. For example, because in the video stream to be processed shot by the camera device on the mobile terminal, a plurality of video frames all carry corresponding time stamps, on this basis, after the pictures corresponding to the target effect material are added into the corresponding video frames, a plurality of effect video frames are obtained. For example, the application needs to determine the sequence corresponding to the plurality of effect video frames according to the time stamps carried by the plurality of video frames, so as to splice the plurality of effect video frames according to the sequence to obtain the target effect video.

For example, when the target effect material is the 3D cup model manually adjusted by the user, and the pixel values of the plurality of pixels of the 3D cup model in the display interface have been determined, the application can add the picture corresponding to the model to the corresponding video frames to obtain a plurality of effect video frames comprising the 3D cup picture. For example, the plurality of effect video frames are spliced based on the sequence corresponding to the plurality of effect video frames, that is, the target effect video with the picture presented by the cup model as the foreground image and the video picture shot by the user in real time as the background image is obtained.

It should be noted that when it is detected that the control for saving the target effect video is triggered, a configuration file to be used is generated based on the edit parameter to be applied associated with the target edit item, so as to play, in response to detecting to play the target effect video, the target effect video based on the configuration file to be used and a player.

For example, a storage control can be developed in advance in the application, and the storage control can be triggered after the user finishes adjusting the edit parameter of the target edit item and the corresponding effect video is generated. At this time, the application can construct the corresponding configuration file to be used based on the adjusted edit parameters of the effect template, and for example, the file and video data are bound and packaged for storage. On this basis, when the user selects the target effect video from an effect video playlist, the application can call the configuration file to be used, and apply the parameters in the file to the effect material in the effect video, thus displaying the target effect video through the player. It can be understood that storing the configuration file to be used after the user has adjusted the edit parameter avoids the process of adjusting the display style of the material many times every time the target effect video is played in the subsequence process, which not only reduces the occupation of computing resources, but also improves the response speed of the application to the effect video playing operation.

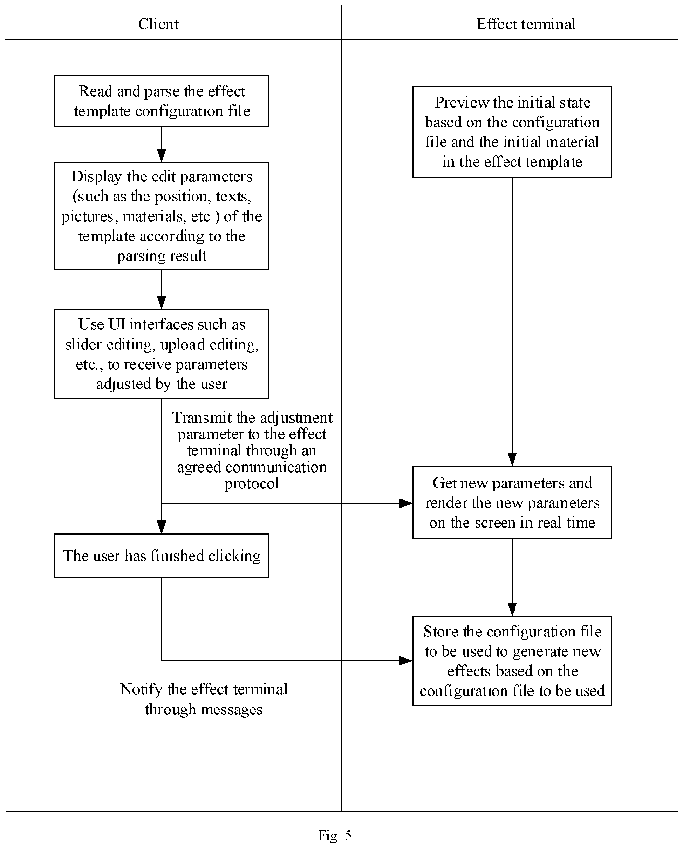

In the actual application process, the scheme of this embodiment can also be executed based on the schematic diagram shown in Fig. 5. For example, referring to Fig. 5, the scheme of this embodiment can be realized through the cooperation between the client and the effect terminal. Before the user creates an effect video based on the client, the effect terminal needs to first create the configuration file and the initial material in the effect template, so as to facilitate the user to preview the initial state of the effect. Among them, the configuration file includes the parameters such as the type of AR algorithm adopted by the effect, the path of the AR anchor file, the address of the loaded music file, the parameter that determines whether the music is played circularly, the address of the loaded picture file, the rotation coordinate and size of the picture in the scene, the adaptation or stretching mode of the picture, the content of the loaded text, the rotation coordinate and size of the text in the scene, the font path, the font size, the address of the loaded video file, the rotation coordinate and size of the video in the scene, the parameter that determines whether the video is played circularly, the address of the loaded 3D model file, the rotation coordinates and size of the model in the scene, the model material color, and the path of the model map file, etc. It can be understood that there is only one corresponding configuration file for an effect template.

Referring to Fig. 5, after the client obtains the configuration file corresponding to the effect template, the client can parse the file, so as to display the edit parameters (such as the position, texts, pictures, materials, etc. of the effect) of the effect to the user in the display interface. Based on this, the user can adjust these parameters through the drag bars corresponding to the plurality of edit parameters. When the user has finished clicking, it indicates that after the parameters of the effect have been adjusted, the client can transmit the information to the effect terminal through an agreed communication protocol, so that the effect terminal can render to obtain the target effect materials based on the adjusted parameters and add the target effect materials to the corresponding video frames to obtain the target effect video. At the same time, the effect terminal can also generate the configuration file to be used based on the adjusted parameters and store the configuration file to be used, so that when the user plays the effect video through the client, the target effect video is played based on the configuration file to be used and the player associated with the client.

According to the technical scheme of the embodiments of the present disclosure, when detecting that the target effect template is triggered, the target configuration file corresponding to the target effect template is retrieved, the target edit item corresponding to the target effect template and the edit parameter of the target edit item are determined through parsing and processing the target configuration file, and the target edit item is displayed, that is, a channel for adjusting the parameters related to the effect is provided for users; for example, when the effect material to be edited corresponding to the corresponding target edit item is received, the edit parameter corresponding to the target edit item is displayed, so as to determine the target effect material corresponding to the effect material to be edited based on an adjustment operation on the edit parameter, and the target effect video with the video stream to be processed as the background information is obtained based on the target effect material and a corresponding video stream to be processed, so that the user does not need to have strong technical skills to create effect videos that meet the personalized needs in a simple and quick way, and at the same time, the production process of the effect video is free from the constraints and limitations of platform and hardware performance, and the production threshold of the effect video is lowered.

### Embodiment 2

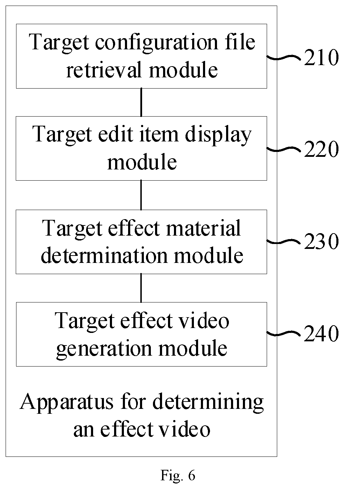

Fig. 6 is a schematic structural diagram of an apparatus for determining an effect video provided by embodiment 2 of the present disclosure. As shown in Fig. 6, the apparatus is configured in a client and includes a target configuration file retrieval module 210, a target edit item display module 220, a target effect material determination module 230, and a target effect video generation module 240.

The target configuration file retrieval module 210 is configured to retrieve a target configuration file corresponding to a target effect template in response to detecting that the target effect template is triggered.

The target edit item display module 220 is configured to determine a target edit item corresponding to the target effect template and an edit parameter of the target edit item through parsing and processing the target configuration file, and display the target edit item.

The target effect material determination module 230 is configured to, in response to receiving an effect material to be edited corresponding to a corresponding target edit item, display the edit parameter corresponding to the target edit item, so as to determine a target effect material corresponding to the effect material to be edited based on an adjustment operation on the edit parameter.

The target effect video generation module 240 is configured to obtain a target effect video with the video stream to be processed as background information based on the target effect material and the corresponding video stream to be processed.

On the basis of the above technical scheme, the apparatus for determining an effect video further comprises a configuration file determination module.

The configuration file determination module is configured to create at least one effect template to be used; determine at least one edit item and an edit parameter of the edit item according to an information type of displayable information in an effect template to be used; determine a configuration file of the effect template to be used according to the edit item of the effect template to be used and the corresponding edit parameter; display the effect template to be used in the display interface, and establish a corresponding relationship between the effect template to be used and the corresponding configuration file, so as to determine the target configuration file based on the corresponding relationship in response to detecting that the target effect template is triggered.

On the basis of the above technical scheme, the apparatus for determining an effect video further comprises a target effect material generation module.

The target effect material generation module is configured to start a camera device and jump to a video shooting interface, so as to generate the target effect material by taking the video stream to be processed from a camera perspective as a background image.

Optionally, the target edit item display module 220 is further configured to display the target edit item in a form of a sliding window in a first display region of a video shooting interface, so as to determine an effect material to be uploaded according to the target edit item corresponding to a current sliding window.

On the basis of the above technical scheme, the target effect material determination module 230 includes a to-be-edited effect material determination unit and an edit parameter display unit.

The to-be-edited effect material determination unit is configured to determine at least one effect material to be uploaded according to the target edit item corresponding to the current sliding window, and determine the effect material to be edited according to a trigger operation on the at least one effect material to be uploaded.

The edit parameter display unit is configured to display edit parameters associated with the target edit item in a second display region in a form of drag bars, respectively, in response to receiving the effect material to be edited; the second display region is located in the video shooting interface and is different from the first display region.

On the basis of the above technical scheme, the apparatus for determining an effect video further comprises an adjustment module.

The adjustment module is configured to determine an edit parameter to be applied corresponding to the effect material to be edited according to a trigger operation on a parameter adjustment control on a drag bar; send the edit parameter to be applied to an effect processing module, so that the effect processing module renders the effect material to be edited based on the edit parameter to be applied to obtain the target effect material.

On the basis of the above technical scheme, the apparatus for determining an effect video further comprises a to-be-used configuration file generation module.

The to-be-used configuration file generation module is configured to generate a configuration file to be used based on an edit parameter to be applied associated with the target edit item in response to detecting that a control for saving the target effect video is triggered, so as to play, in response to detecting to play the target effect video, the target effect video based on the configuration file to be used and a player.

On the basis of the above technical scheme, the target edit item includes at least one of: a text item, an image item, a video item, an audio item, an AR model item, a 3D model item, and a file item.

On the basis of the above technical scheme, the edit parameter corresponding to the target edit item includes at least one of: an audio address parameter, a playing parameter, an image address parameter, a display parameter, a video address parameter, an AR model address parameter, a 3D model address parameter, a scaling parameter, a color parameter, and a mapping parameter.

In the technical scheme provided by the embodiment, when a target effect template is detected to be triggered, a target configuration file corresponding to the target effect template is retrieved, the target edit item corresponding to the target effect template and the edit parameter of the target edit item are determined through parsing and processing the target configuration file, and the target edit item is displayed, that is, a way for adjusting the parameters related to the effect is provided for users; for example, when the effect material to be edited corresponding to the corresponding target edit item is received, the edit parameter corresponding to the target edit item is displayed, so that the target effect material corresponding to the effect material to be edited is determined based on the adjustment operation on the edit parameter, and the target effect video with the video stream to be processed as the background information is obtained based on the target effect material and the corresponding video stream to be processed, so that users can create effect videos that meet the personalized needs in a simple and quick way without having strong technical skills, at the same time, the production process of effect videos is free from the constraints and limitations of platform and hardware performance, and the production threshold of effect videos is lowered.

The apparatus for determining an effect video provided by the embodiment of the present disclosure can execute the method for determining an effect video provided by any embodiment of the present disclosure, and has corresponding functional modules and technical effects.

### Embodiment 3

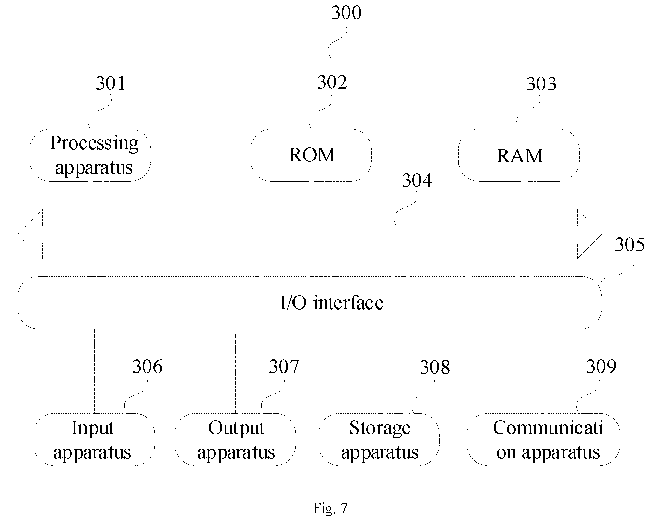

Fig. 7 is a schematic structural diagram of an electronic device provided in embodiment 3 of the present disclosure. Reference is now made to Fig. 7, which shows a structural schematic diagram of an electronic device (such as a terminal device or a server in Fig. 7) 300 suitable for implementing an embodiment of the present disclosure. The terminal device in the embodiments of the present disclosure can include, but is not limited to, mobile terminals such as a mobile phone, a notebook computer, a digital broadcasting receiver, a personal digital assistant (PDA), a portable Android device (PAD), a portable media player (PMP), a vehicle-mounted terminal (e.g., a vehicle-mounted navigation terminal), or the like, and fixed terminals such as a digital TV, a desktop computer, or the like. The electronic device shown in Fig. 7 is only an example, and should not bring any limitation to the function and application scope of the embodiments of the present disclosure.

As shown in Fig. 7, the electronic device 300 can include a processing apparatus 301 (e.g., a central processing unit, a graphics processing unit, etc.), the processing apparatus 301 can perform various suitable actions and processing according to a program stored in a read-only memory (ROM) 302 or a program loaded from a storage apparatus 308 into a random-access memory (RAM) 303. The RAM 303 further stores various programs and data required for operations of the electronic device 300. The processing apparatus 301, the ROM 302, and the RAM 303 are interconnected to each other by means of a bus 304. An input/output (I/O) interface 305 is also connected to the bus 304.

Generally, the following apparatus can be connected to the I/O interface 305: an edit apparatus 306 including, for example, a touch screen, a touch pad, a keyboard, a mouse, a camera, a microphone, an accelerometer, a gyroscope, or the like; an output apparatus 307 including, for example, a liquid crystal display (LCD), a loudspeaker, a vibrator, or the like; a storage apparatus 308 including, for example, a magnetic tape, a hard disk, or the like; and a communication apparatus 309. The communication apparatus 309 may allow the electronic device 300 to be in wireless or wired communication with other devices to exchange data. While Fig. 7 illustrates the electronic device 300 having various apparatuses, it should be understood that not all of the illustrated apparatuses are necessarily implemented or included. More or fewer apparatuses may be implemented or provided alternatively.

Particularly, according to the embodiments of the present disclosure, the processes described above with reference to the flowcharts can be implemented as a computer software program. For example, the embodiments of the present disclosure include a computer-executable instruction, which includes a computer program carried on a non-transitory computer-readable medium. The computer program includes program codes for performing the methods shown in the flowcharts. In such embodiments, the computer program may be downloaded from the network through the communication apparatus 309 and installed, or may be installed from the storage apparatus 308, or may be installed from the ROM 302. When the computer program is executed by the processing apparatus 301, the above-mentioned functions defined in the method of the embodiments of the present disclosure are performed.

The electronic device provided by the embodiments of the present disclosure belongs to the same inventive concept as the method for determining the effect video provided by the above embodiment, and the technical details not described in detail in the present embodiment can be found in the above embodiments, and the present embodiment has the same technical effect as the above embodiment.

### Embodiment 4

An embodiment of the present disclosure provides a storage medium of computer-executable instructions, the computer-executable instructions are stored on the storage medium, and when the computer-executable instruction program is executed by a processor, the method for determining the effect video provided in the above embodiment is implemented.

It should be noted that the above-mentioned storage medium of computer-executable instructions in the present disclosure may be a computer-readable signal medium or a computer-readable storage medium or any combination thereof. For example, the computer-readable storage medium may be, but not limited to, an electric, magnetic, optical, electromagnetic, infrared, or semi-conductive system, apparatus, or device, or any combination thereof. Examples of the computer-readable storage medium may include but not be limited to: an electrical connection with at least one wire, a portable computer disk, a hard disk, a random-access memory (RAM), a read-only memory (ROM), an erasable programmable read-only memory (EPROM or flash memory), a flash memory, an optical fiber, a compact disc read-only memory (CD-ROM), an optical storage device, a magnetic storage device, or any appropriate combination of them. In the present disclosure, the storage medium of computer-executable instructions may be any tangible medium containing or storing a program that can be used by or in combination with an instruction execution system, apparatus or device. In the present disclosure, the storage medium of computer-executable instructions may include a data signal that propagates in a baseband or as a part of a carrier wave and carries computer-readable program codes. The data signal propagating in such a manner may take a plurality of forms, including but not limited to an electromagnetic signal, an optical signal, or any appropriate combination thereof. The storage medium of computer-executable instructions may also be any other computer-readable medium than the computer-readable storage medium. The storage medium of computer-executable instructions may send, propagate, or transmit a program used by or in combination with an instruction execution system, apparatus, or device. The program code contained on the storage medium of computer-executable instructions may be transmitted by using any suitable medium, including but not limited to an electric wire, a fiber-optic cable, radio frequency (RF) and the like, or any appropriate combination of them.

In one implementation mode, the client and the server may communicate with any network protocol currently known or to be developed in the future such as hypertext transfer protocol (HTTP), and may communicate (via a communication network) and interconnect with digital data in any form or medium. Examples of the communication network include a local area network (LAN), a wide area network (WAN), the Internet, and an end-to-end network (e.g., an ad hoc end-to-end network), as well as any network currently known or to be developed in the future.

The above-mentioned storage medium of computer-executable instructions may be included in the above-mentioned electronic device, or may also exist alone without being assembled into the electronic device.

The above-mentioned storage medium of computer-executable instructions carries at least one program, and when the at least one program is executed by the electronic device, the electronic device is caused to:
in response to detecting that a target effect template is triggered, retrieving a target configuration file corresponding to the target effect template;
determining target edit item(s) corresponding to the target effect template and an edit parameter of each target edit item by parsing and processing the target configuration file, and displaying the target edit item(s);
in response to receiving an effect material to be edited corresponding to a corresponding target edit item, displaying the edit parameter corresponding to the target edit item, so as to determine a target effect material corresponding to the effect material to be edited based on an adjustment operation on the edit parameter; and
based on the respective target effect materials and a corresponding video stream to be processed, obtaining a target effect video with the video stream to be processed as background information.

The computer program codes for performing the operations of the present disclosure may be written in at least one programming language or a combination thereof. The above-mentioned programming languages include but are not limited to object-oriented programming languages such as Java, Smalltalk, C++, and also include conventional procedural programming languages such as the "C" programming language or similar programming languages. The program code may be executed entirely on the user's computer, partly on the user's computer, as a stand-alone software package, partly on the user's computer and partly on a remote computer, or entirely on the remote computer or server. In the scenario related to the remote computer, the remote computer may be connected to the user's computer through any type of network, including a local area network (LAN) or a wide area network (WAN), or may be connected to an external computer (for example, through the Internet using an Internet service provider).

The flowcharts and block diagrams in the accompanying drawings illustrate the architecture, functionality, and operation of possible implementations of systems, methods, and computer program products according to various embodiments of the present disclosure. In this regard, each block in the flowcharts or block diagrams may represent a module, a program segment, or a portion of codes, and the module, the program segment, or the portion of codes includes at least one executable instruction for implementing specified logical functions. It should also be noted that, in some alternative implementations, functions marked in the blocks may also occur in an order different from the order designated in the accompanying drawings. For example, two consecutive blocks can actually be executed substantially in parallel, and they may sometimes be executed in a reverse order, which depends on involved functions. It should also be noted that each block in the flowcharts and/or block diagrams and combinations of the blocks in the flowcharts and/or block diagrams may be implemented by a dedicated hardware-based system for executing specified functions or operations, or may be implemented by a combination of a dedicated hardware and computer instructions.

The units involved in the embodiments of the present disclosure may be implemented by software, or may also be implemented by hardware. The name of a unit does not constitute a limitation on the unit itself. For example, a first acquisition unit may also be described as "a unit that acquires at least two Internet Protocol addresses".

The functions described above in the present disclosure may be executed at least in part by at least one hardware logic component. For example, without limitations, exemplary types of the hardware logic components that can be used include: a field programmable gate array (FPGA), an application specific integrated circuit (ASIC), an application specific standard parts (ASSP), a system on chip (SOC), a complex programmable logic device (CPLD), and the like.

In the context of the present disclosure, a machine-readable medium may be a tangible medium that may contain or store a program for use by or in combination with an instruction execution system, apparatus, or device. The machine-readable medium may be a machine-readable signal medium or a machine-readable storage medium. The machine-readable medium may include but not be limited to an electronic, magnetic, optical, electromagnetic, infrared, or semi-conductive system, apparatus, or device, or any appropriate combination of them. Examples of the machine-readable storage medium may include an electrical connection based on at least one wire, a portable computer disk, a hard disk, a random-access memory (RAM), a read-only memory (ROM), an erasable programmable read-only memory (EPROM or flash memory), an optical fiber, a portable compact disk read-only memory (CD-ROM), an optical storage device, a magnetic storage device, or any appropriate combination of them.

According to at least one embodiment of the present disclosure, [Example 1] provides a method for determining an effect video, and the method includes:
in response to detecting that a target effect template is triggered, retrieving a target configuration file corresponding to the target effect template;
determining a target edit item corresponding to the target effect template and an edit parameter of the target edit item by parsing and processing the target configuration file, and displaying the target edit item;
in response to receiving an effect material to be edited corresponding to a corresponding target edit item, displaying the edit parameter corresponding to the target edit item, so as to determine a target effect material corresponding to the effect material to be edited based on an adjustment operation on the edit parameter; and
based on the target effect material and a corresponding video stream to be processed, obtaining a target effect video with the video stream to be processed as background information.

According to at least one embodiment of the present disclosure, [Example 2] provides a method for determining an effect video, and the method further comprises:
optionally, creating at least one effect template to be used;
determining at least one edit item and an edit parameter of the edit item according to an information type of displayable information in an effect template to be used;
determining a configuration file of the effect template to be used according to the edit item of the effect template to be used and the corresponding edit parameter; and
displaying the effect template to be used in a display interface, and establishing a corresponding relationship between the effect template to be used and the corresponding configuration file, so as to determine the target configuration file based on the corresponding relationship in response to detecting that the target effect template is triggered.

According to at least one embodiment of the present disclosure, [Example 3] provides a method for determining an effect video, and the method further comprises:
optionally, starting a camera device and jumping to a video shooting interface to generate the target effect material by taking the video stream to be processed from a camera perspective as a background image.

According to at least one embodiment of the present disclosure, [Example 4] provides a method for determining an effect video, and the method further comprises:
optionally, displaying the target edit item in a form of a sliding window in a first display region of a video shooting interface, so as to determine an effect material to be uploaded according to the target edit item corresponding to a current sliding window.

According to at least one embodiment of the present disclosure, [Example 5] provides a method for determining an effect video, and the method further comprises:
optionally, determining at least one effect material to be uploaded according to the target edit item corresponding to the current sliding window, and determining the effect material to be edited according to a trigger operation on the at least one effect material to be uploaded; and
in response to receiving the effect material to be edited, displaying edit parameters associated with the target edit item in a second display region in a form of drag bars, respectively.

The second display region is in the video shooting interface and is different from the first display region.

According to at least one embodiment of the present disclosure, [Example 6] provides a method for determining an effect video, and the method further comprises:
optionally, according to a trigger operation on a parameter adjustment control on a drag bar, determining an edit parameter to be applied corresponding to the effect material to be edited;
sending the edit parameter to be applied to an effect processing module, so that the effect processing module renders the effect material to be edited based on the edit parameter to be applied to obtain the target effect material.

According to at least one embodiment of the present disclosure, [Example 7] provides a method for determining an effect video, and the method further comprises:
optionally, generating a configuration file to be used based on an edit parameter to be applied associated with the target edit item in response to detecting that a control for saving the target effect video is triggered, so as to play, in response to detecting to play the target effect video, the target effect video based on the configuration file to be used and a player.

According to at least one embodiment of the present disclosure, [Example 8] provides a method for determining an effect video, and the method further comprises:
optionally, the target edit item comprises at least one of a text item, an image item, a video item, an audio item, an AR model item, a 3D model item, and a file item.

According to at least one embodiment of the present disclosure, [Example 9] provides a method for determining an effect video, and the method further comprises:

Optionally, the edit parameter corresponding to the target edit item comprises at least one of an audio address parameter, a playing parameter, an image address parameter, a display parameter, a video address parameter, an AR model address parameter, a 3D model address parameter, a scaling parameter, a color parameter, and a mapping parameter.

According to at least one embodiment of the present disclosure, [Example 10] provides an apparatus for determining an effect video, and the apparatus includes:
a target configuration file retrieval module, configured to retrieve a target configuration file corresponding to a target effect template in response to detecting that the target effect template is triggered;
a target edit item display module, configured to determine a target edit item corresponding to the target effect template and an edit parameter of the target edit item by parsing and processing the target configuration file, and display the target edit item;
a target effect material determination module, configured to, in response to receiving an effect material to be edited corresponding to a corresponding target edit item, display the edit parameter corresponding to the target edit item, so as to determine a target effect material corresponding to the effect material to be edited based on an adjustment operation on the edit parameter; and
a target effect video generation module, configured to, based on the target effect material and a corresponding video stream to be processed, obtain a target effect video with the video stream to be processed as background information.

## Claims

1. A method for determining an effect video, applied to a client and comprising:
in response to detecting that a target effect template is triggered, retrieving a target configuration file corresponding to the target effect template;
determining a target edit item corresponding to the target effect template and an edit parameter of the target edit item by parsing and processing the target configuration file, and displaying the target edit item;
in response to receiving an effect material to be edited corresponding to a corresponding target edit item, displaying the edit parameter corresponding to the target edit item, so as to determine a target effect material corresponding to the effect material to be edited based on an adjustment operation on the edit parameter; and
based on the target effect material and a corresponding video stream to be processed, obtaining a target effect video with the video stream to be processed as background information.

2. The method according to claim 1, wherein before the in response to detecting that a target effect template is triggered, retrieving a target configuration file corresponding to the target effect template, the method further comprises:
creating at least one effect template to be used;
determining at least one edit item and an edit parameter of the edit item according to an information type of displayable information in an effect template to be used;
determining a configuration file of the effect template to be used according to the edit item of the effect template to be used and the corresponding edit parameter; and
displaying the effect template to be used in a display interface, and establishing a corresponding relationship between the effect template to be used and the corresponding configuration file, so as to determine the target configuration file based on the corresponding relationship in response to detecting that the target effect template is triggered.

3. The method according to claim 1, wherein in response to detecting that the target effect template is triggered, the method further comprises:
starting a camera device and jumping to a video shooting interface to generate the target effect material by taking the video stream to be processed from a camera perspective as a background image.

4. The method according to claim 1, wherein the displaying the target edit item comprises:
displaying the target edit item in a form of a sliding window in a first display region of a video shooting interface, so as to determine an effect material to be uploaded according to the target edit item corresponding to a current sliding window.

5. The method according to claim 4, wherein the in response to receiving an effect material to be edited corresponding to a corresponding target edit item, displaying the edit parameter corresponding to the target edit item comprises:
determining at least one effect material to be uploaded according to the target edit item corresponding to the current sliding window, and determining the effect material to be edited according to a trigger operation on the at least one effect material to be uploaded; and
in response to receiving the effect material to be edited, displaying edit parameters associated with the target edit item in a second display region in a form of drag bars, respectively;
wherein the second display region is in the video shooting interface and is different from the first display region.

6. The method according to claim 5, further comprising:
according to a trigger operation on a parameter adjustment control on a drag bar, determining an edit parameter to be applied corresponding to the effect material to be edited; and
sending the edit parameter to be applied to an effect processing module, so that the effect processing module renders the effect material to be edited based on the edit parameter to be applied to obtain the target effect material.

7. The method according to claim 1, further comprising:
generating a configuration file to be used based on an edit parameter to be applied associated with the target edit item in response to detecting that a control for saving the target effect video is triggered, so as to play, in response to detecting to play the target effect video, the target effect video based on the configuration file to be used and a player.

8. The method according to any one of claims 1-7, wherein the target edit item comprises at least one of a text item, an image item, a video item, an audio item, an AR augmented reality model item, a 3D three-dimensional model item, and a file item.

9. The method according to any one of claims 1-7, wherein the edit parameter corresponding to the target edit item comprises at least one of an audio address parameter, a playing parameter, an image address parameter, a display parameter, a video address parameter, an AR model address parameter, a 3D model address parameter, a scaling parameter, a color parameter, and a mapping parameter.

10. An apparatus for determining an effect video, configured in a client and comprising:
a target configuration file retrieval module (210), configured to retrieve a target configuration file corresponding to a target effect template in response to detecting that the target effect template is triggered;
a target edit item display module (220), configured to determine a target edit item corresponding to the target effect template and an edit parameter of the target edit item by parsing and processing the target configuration file, and display the target edit item;
a target effect material determination module (230), configured to, in response to receiving an effect material to be edited corresponding to a corresponding target edit item, display the edit parameter corresponding to the target edit item, so as to determine a target effect material corresponding to the effect material to be edited based on an adjustment operation on the edit parameter; and
a target effect video generation module (240), configured to, based on the target effect material and a corresponding video stream to be processed, obtain a target effect video with the video stream to be processed as background information.

11. An electronic device, comprising:
at least one processor;
a storage apparatus, configured to store at least one program,
wherein when the at least one program is executed by the at least one processor, the at least one processor is enabled to implement the method for determining an effect video according to any one of claims 1 to 9.

12. A storage medium, comprising computer-executable instructions, wherein the computer-executable instructions, when executed by a computer processor, are used to perform the method for determining an effect video according to any one of claims 1-9.
